# EUROPEAN PATENT SPECIFICATION

(11) **EP 1 958 728 B1**
(45) Date of publication and mention of the grant of the patent: **20.03.2013**
(21) Application number: 08150741.0
(22) Date of filing: 29.01.2008
(51) Int. Cl.: B23K 26/40, B23K 26/08

(54) **Laser cutting machine in association with two or more embroidering machines**
Laserschneidemaschine in Kombination mit zumindest zwei Stickmaschinen
Machine de découpe au laser en association avec au moins deux machines à tisser

(30) Priority: 14.02.2007 IT TV20070024
(43) Date of publication of application: 20.08.2008
(73) Proprietor: GMI S.R.L., 31029 Vittorio Veneto, TV (IT)
(72) Inventor: Battiston, Arrigo, 31012 Cappella Maggiore TV (IT)
(74) Representative: Modiano, Micaela Nadia

(56) References cited:
- EP-A- 0 743 129
- EP-A- 1 250 975
- DE-A1- 3 717 960
- DE-A1- 19 630 074
- DE-B3-102005 050 482
- NL-C2- 1 004 483

## Description

The present invention relates to a laser cutting machine in combination with two or more embroidering machines.

Currently, in order to provide one or more holes and/or cuts and/or items of embroidery on a fabric, embroidering and laser cutting machines are used which comprise a vertical frame, which has an elongated shape and is substantially rectilinear and is adapted to keep in a vertical position and in a fully stretched condition a band of fabric or multiple mutually superimposed bands of one or more fabrics.

Such frame can perform horizontal and vertical translational motions in order to move the band or bands of fabric supported by it into a selected position with respect to a suitable fixed embroidering device, so as to provide the chosen embroidery along the entire length of the fabric; the motion of the frame and the embroidering device are controlled by a programmable control device, such as for example a computer.

These known types of machine further comprise a device which is adapted to provide holes in, and/or cut, the band of fabric (or one or more of the mutually superimposed bands of fabric) before or after embroidering it, by means of the controlled emission of a suitable laser beam; in this manner it is possible to obtain a very clean and precise hole or cut in the embroidered or non-embroidered fabric, even with very complex geometries (see document DE-B-10 2005 050 482).

The laser cutting device, of a known type, comprises a box-like body which contains appropriately provided means adapted to generate and direct in the chosen direction a laser beam, which exits in a controlled manner from the box-like body in order to score or cut the fabric.

The box-like body is supported slidingly by an appropriately provided longitudinal guide, which is arranged in such a position that the box-like body can slide parallel to the vertical frame.

The position of the device adapted to provide holes in the fabric and/or cut it, and therefore the position of the laser, is controlled by a programmable control device, such as for example a computer.

These known types of embroidering and laser cutting machine, however, suffer a drawback: during laser cutting, in fact, the embroidering device cannot work, while during the embroidering step the cutting device adapted to provide holes and/or cut the fabric must remain in an idle condition; this entails long processing times for these known types of embroidering and laser cutting machine, which have a negative effect on the manufacturing costs of the products obtained with them.

Moreover, by having to work in alternate steps, the embroidering device and the device for providing the holes and/or cutting the fabric remain cyclically in an idle condition, which reduces their productivity and therefore increases their amortization times.

EP 1 250 975 discloses a laser beam hardening device wherein the laser device is adapted to work on working pieces that are arranged in line.

The aim of the present invention is to solve the above-mentioned problems, eliminating the drawbacks of the cited background art, by providing a laser cutting machine which allows to achieve cutting or perforation by means of a laser, particularly of fabric, before or after embroidering it, with shorter processing times.

Within this aim, an object of the invention is to provide a machine which has high productivity.

Another object is to provide a machine which is structurally simple and has low manufacturing costs.

This aim and these and other objects which will become better apparent hereinafter are achieved by a laser cutting machine, according to claim 1.

Further characteristics and advantages of the invention will become better apparent from the following detailed description of a particular but not exclusive embodiment thereof, illustrated by way of non-limiting example in the accompanying drawings, wherein:
Figure 1 is a schematic front view of the machine, according to the invention;
Figures 2 to 6 are schematic plan views of some steps of the use of the machine;
Figures 7 to 10 are schematic plan views of some steps of the use of a second embodiment of the machine according to the invention;
Figure 11 is a schematic front view of a third embodiment of the machine according to the invention;
Figures 12 to 14 are schematic plan views of some steps of the use of the third embodiment of the machine;
Figures 15 to 17 are schematic plan views of some steps of the use of a fourth embodiment of the machine according to the invention.

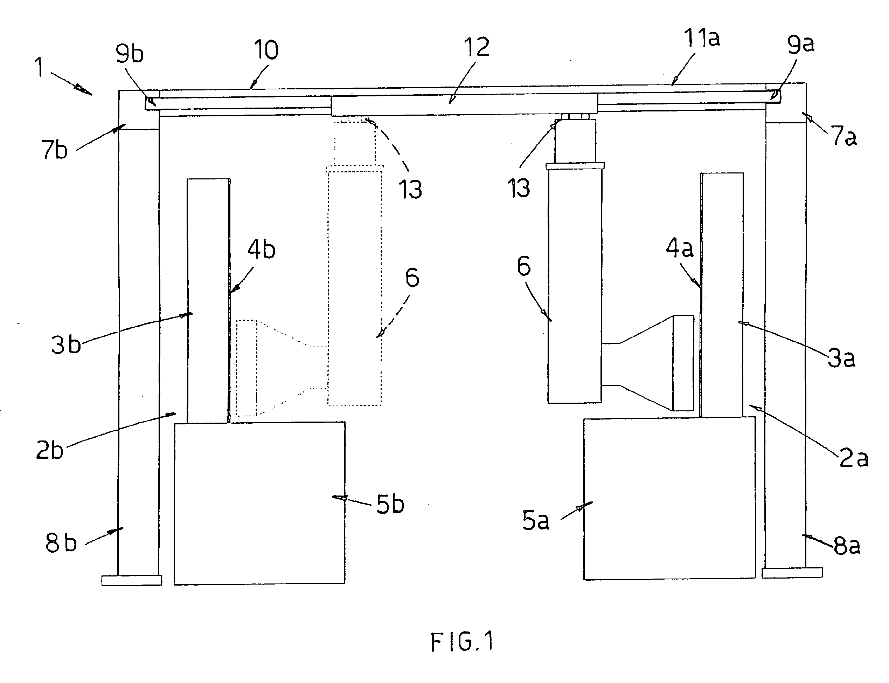

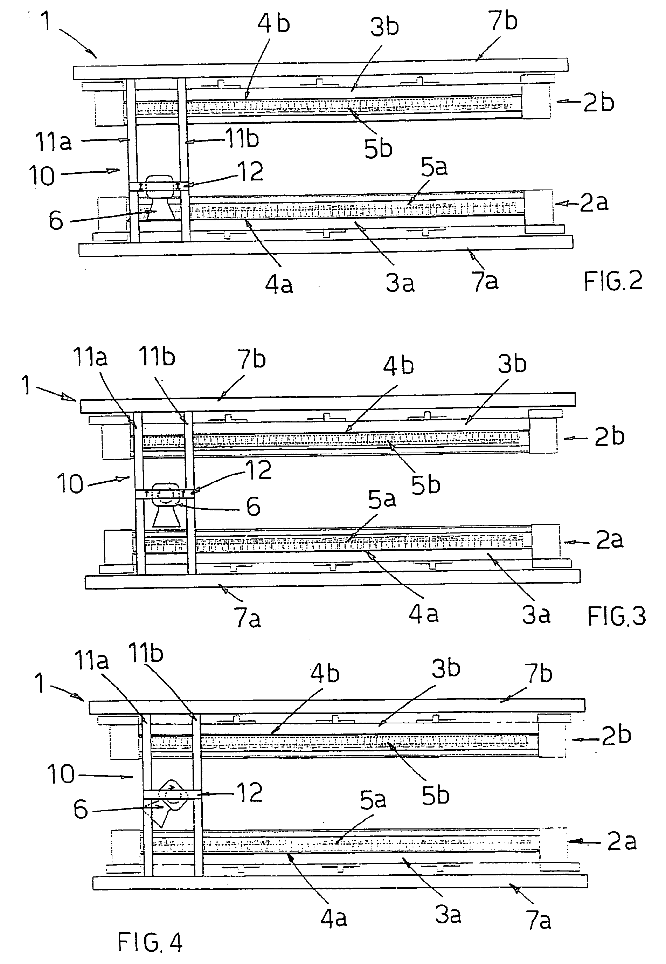

With reference to Figures 1 to 6, the reference numeral 1 designates a laser cutting machine, particularly for association with one or more embroidering machines 2a, 2b.

The embodiment shown in Figures 1 to 6 shows two separate embroidering machines 2a, 2b, each having a single supporting frame 3a, 3b for at least two bands of fabric, designated by the reference numerals 4a, 4b respectively, stretched in a substantially vertical position so as to face each other and be substantially parallel to each other; advantageously, the frames 3a, 3b can each support even more than one band of one or more fabrics which are mutually superimposed.

The two frames 3a, 3b conveniently have an elongated shape, face each other, and are substantially mutually parallel.

The frames 3a, 3b can perform a horizontal translational motion and a vertical translational motion in order to move the bands of fabric 4a, 4b that they support into a selected position with respect to suitable fixed embroidering devices, schematically designated by the reference numerals 5a, 5b in the accompanying figures, so as to provide the chosen embroidery on the entire length of the bands of fabric 4a, 4b; the motion of the frames 3a, 3b and of the embroidering devices 5a, 5b is controlled by appropriately provided first control devices, such as for example a computer, not shown in the accompanying figures.

The laser cutting machine 1 comprises guiding means, which are adapted to allow the sliding, parallel to the bands of fabric 4a, 4b and therefore to the frames 3a, 3b, of at least one laser cutting device 6.

Advantageously, such guiding means are constituted by two substantially straight rails 7a, 7b, which are approximately parallel to each other and to the frames 3a, 3b; advantageously, as shown in Figure 1, the rails 7a, 7b are associated with the upper ends of appropriately provided columns, designated by the reference numerals 8a, 8b, which are arranged laterally and externally with respect to the frames 3a, 3b and are provided with such a height as to protrude above the said frames with their upper ends.

As an alternative, the rails 7a, 7b can be fixed for example to the ceiling or to one or more walls of a building by way of appropriately provided means or brackets, not shown in the accompanying figures.

Conveniently, the rails 7a, 7b run longitudinally parallel to the frames 3a, 3b and are longer than the two bands of fabric 4a, 4b and therefore than the frames 3a, 3b.

Suitable longitudinal grooves, not shown in the accompanying figures, are formed longitudinally to the rails 7a, 7b in the mutually facing lateral surfaces thereof, and the transverse ends 9a, 9b of a carriage 10, with which the laser cutting device 6 is rotatably associated, are supported slidingly within said grooves.

Advantageously, the carriage 10 is constituted for example by a pair of first bars 11a, 11b which are mutually parallel and are arranged transversely to the rails 7a, 7b, their ends being supported slidingly within the grooves formed in the rails 7a, 7b.

A second bar 12 cooperates to constitute the carriage 10 and is associated slidingly transversely with the first bars 11a, 11b.

The sliding of the second bar 12 with respect to the first bars 11a, 11b is actuated by way of appropriately provided first actuation means, not shown in the accompanying figures, which are controlled by a programmable control device, such as for example a computer, also not shown.

The sliding of the carriage 10 with respect to the rails 7a, 7b is provided by means of suitable second actuation means, not shown in the accompanying figures, which are controlled by a programmable control device, such as for example a computer, also not shown.

The laser cutting device 6 is associated with the second bar 12 in a lower region and so that it can rotate, for example by means of appropriately provided bearings 13, and can advantageously rotate about an axis which is perpendicular to the second bar 12 by way of the action of suitable third actuation means, not shown in the accompanying figures, which are controlled by a programmable control device, such as for example a computer, also not shown; in this manner, the laser cutting device 6 can be oriented selectively toward one or the other of the bands of fabric 4a, 4b and therefore of the frames 3a, 3b.

Advantageously, the programmable control device or devices that control the position of the carriage 10 and of the laser cutting device 6 have appropriate programs which are adapted to modify automatically the position of the carriage 10, of the second bar 12 and of the laser cutting device 6 in order to compensate for any warping and/or out-of-parallelism of the rails 7a, 7b, which might compromise the precision of the laser cut.

Use of the invention is therefore as follows: with reference to Figures 1 to 6, and under the assumption (which is non-limiting and is shown merely to provide one among the various possible uses) that fabric cutting is performed (although it is in any case possible to also perforate the fabric before or after cutting), the laser cutting device 6 is initially positioned at a suitable distance from one of the two frames, for example the one designated by the reference numeral 3a, and the embroidering device 5a begins to embroider the first band of fabric 4a (or optionally multiple mutually superimposed bands of fabric supported by the frame 2a) along its entire length; the frame 3a performs a horizontal and vertical translational motion with respect to the embroidering device 5a, so as to obtain the chosen embroidery on the first band 4a.

Once this chosen embroidery has been obtained, the second bar 12 moves toward the frame 3a, so as to move the laser cutting device 6 to a suitable distance from the first band of fabric 4a.

The carriage 10 then performs a translational motion along the rails 7a and 7b, parallel to the first band of fabric 4a, and the laser cutting device 6 then cuts the first band of fabric 4a, which is appropriately embroidered; if the frame 3a supports multiple mutually superimposed bands of fabric, the laser cutting device 6 can optionally perform a selective incision only along one or more of said bands.

As an alternative, the laser cutting device 6 can provide, before or after cutting, one or more holes in the first band of fabric 4a.

Simultaneously with the embroidering step and/or with the step for laser-cutting the first band of fabric 4a, the embroidering device 5b embroiders the second band of fabric 4b.

Once the cutting of the first band of fabric 4a has ended, the second bar 12 moves away from the frame 3a and the laser cutting device 6 rotates through 180°, so as to be oriented toward the frame 3b; the second bar 12 then moves toward said frame, until the laser cutting device 6 is at a suitable distance from said second band of fabric 4b.

The carriage 10 then runs parallel to the second band of fabric 4b, and the laser cutting device 6 cuts the second band of fabric 4b (and/or perforates it); in this case also, if the frame 3b supports a plurality of bands of fabric which are mutually superimposed, the laser cutting device 6 can optionally perform selective scoring only on one or more of said bands.

During the step for laser cutting of the second band of fabric 4b, the embroidering device 5a can provide, in the meantime, additional embroidery on the first band of fabric 4a, for example at the edge or edges of the cut and/or of any holes provided therein, or can optionally embroider a new band of fabric applied to the first frame 3a.

The cutting and embroidering steps can then proceed, in a manner similar to what has been described, until the chosen embroidering and/or cutting has been achieved.

The entire embroidering and laser cutting process is controlled by one or more programmable control devices, such as for example a suitable computer provided with an appropriately provided program.

It has thus been observed that the invention has achieved the intended aim and objects, a laser cutting machine particularly for association with one or more embroidering machines having been devised which, thanks to the possibility to perform laser cutting of one or more bands of fabric supported by a frame simultaneously with the embroidering of one or more different bands of fabric supported by the other frame, allows to increase production efficiency significantly with respect to known types of embroidering and laser cutting machine.

Further, by using a single laser cutting device which interacts alternately with the bands of fabric supported by both frames, the laser cutting machine according to the invention has reduced production costs.

Moreover, the laser cutting machine according to the invention allows to reduce the idle times of the laser cutting device and of the embroidering devices, thus increasing their efficiency and shortening their amortization times.

The invention is of course susceptible of numerous modifications and variations, all of which are within the scope of the appended claims.

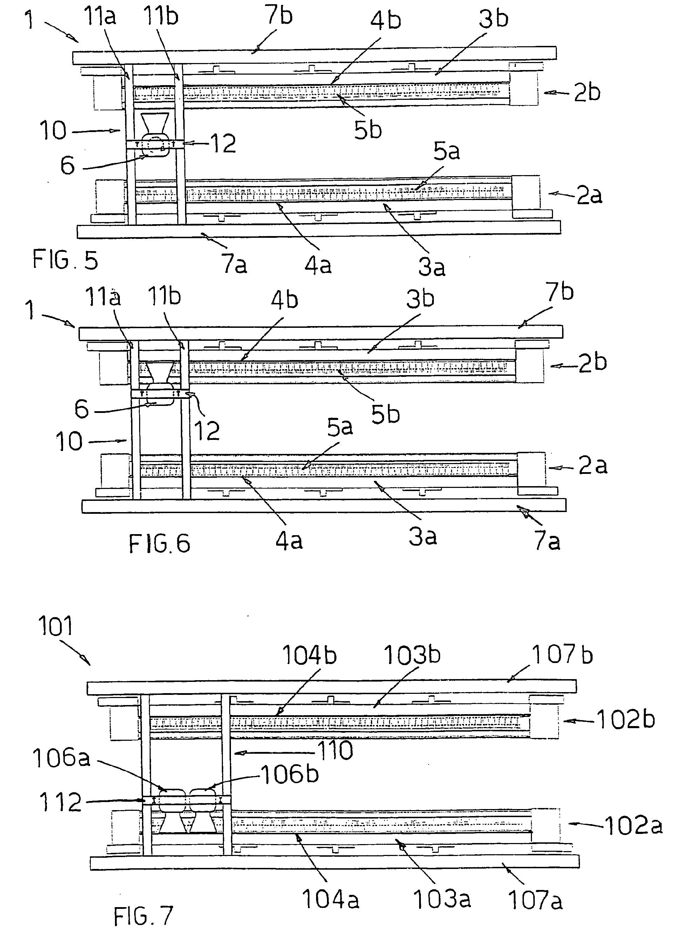

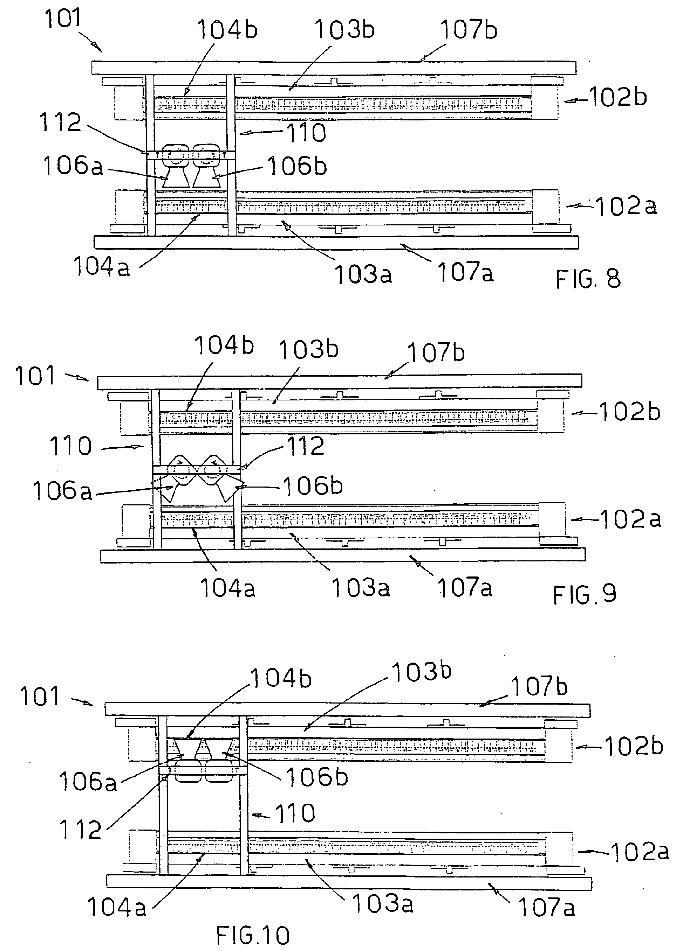

Thus, for example, with reference to Figures 7 to 10, it is possible to provide a laser cutting machine 101, particularly for association with one or more embroidering machines 102a, 102b, in which two laser cutting devices, designated respectively by the reference numerals 106a and 106b and arranged mutually side by side, are associated rotatably and in a lower region with the second bar 112, which is associated with the carriage 110 which can slide with respect to the rails 107a and 107b.

The laser cutting devices 106a and 106b can rotate, for example in mutually opposite directions or in the same direction, about two mutually parallel axes which are perpendicular to the second bar 112 by way of the action of appropriately provided fourth actuation means, not shown in the accompanying figures, which are controlled by a programmable control device, such as for example a computer, which is also not shown.

Each of the laser cutting devices 106a, 106b can thus be oriented selectively toward the same one, or either, of the two bands of fabric 104a, 104b supported respectively by the two frames 103a, 103b.

The operating sequence of the laser cutting machine 101 is substantially similar to the one described earlier with reference to the laser cutting machine 1 shown in Figures 1 to 6, with the difference that in this second case laser cutting is performed, thanks to the presence of two laser cutting devices 106a, 106b, on a longer portion of fabric, thus further increasing production efficiency.

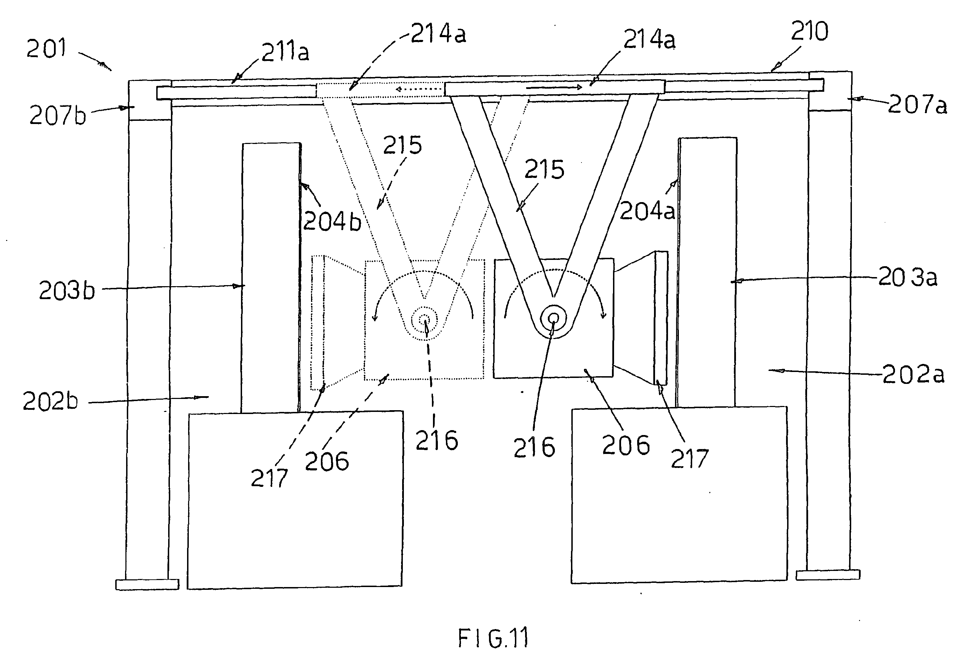

With reference to Figures 11 to 17, it is possible to provide a laser cutting machine 201, particularly for association with one or more embroidering machines 202a, 202b, in which the carriage 210 is constituted for example by a pair of first bars 211a, 211b which are mutually parallel and arranged transversely to the rails 207a, 207b and are optionally mutually connected at their ends and with which two sliders, designated by the reference numerals 214a, 214b, are associated slidingly longitudinally to said bars.

Two shoulders 215, which are for example approximately V-shaped, protrude approximately at right angles below the sliders 214a, 214b, and a suitable shaft 216 is supported between them, preferably at the vertex, and is arranged along an axis which is approximately parallel to the rails 207a, 207b and lies on a plane which is parallel to the plane of arrangement of the first bars 211a, 211b.

The shaft 216 supports rotatably at least one laser cutting device 206, which can thus rotate about the shaft 216 by way of the action of appropriately provided fifth actuation means, not shown in the accompanying figures, which are controlled by a programmable control device, such as for example a computer, again not shown; the laser cutting device 206 can thus be oriented selectively toward one or the other of the bands of fabric 204a, 204b supported by the frames 203a, 203b.

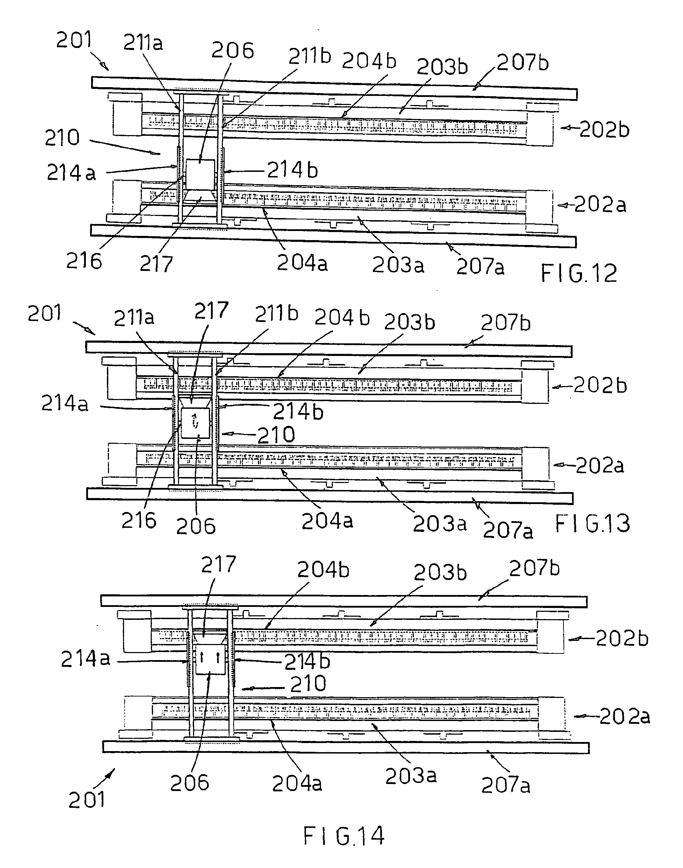

Advantageously, as shown in Figures 12 to 14, the laser cutting device 206 can have a single emitter 217 for a laser beam.

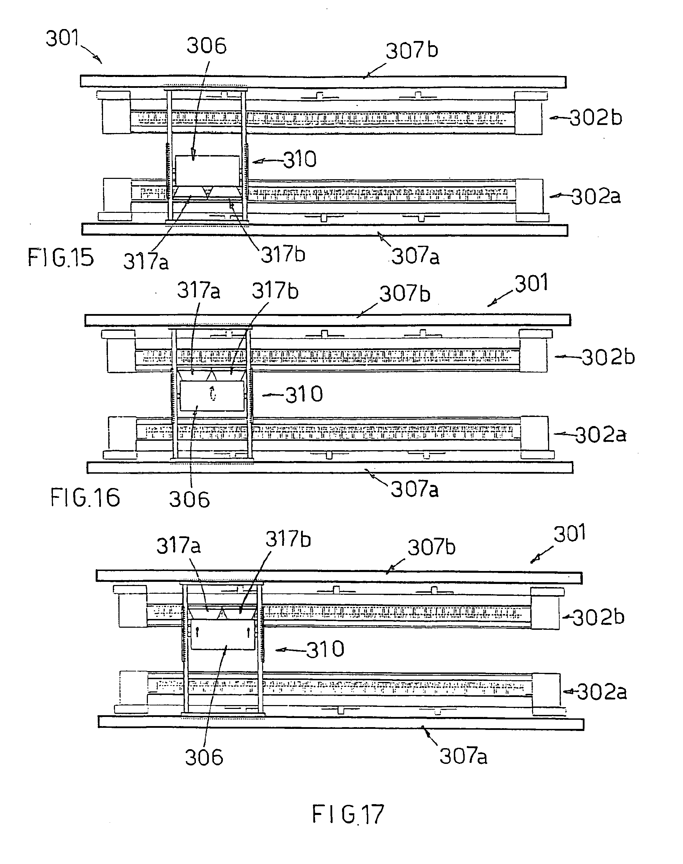

As an alternative, with reference to an additional embodiment shown in Figures 15 to 17, it is possible to provide a laser cutting machine 301, particularly for association with one or more embroidering machines 302a, 302b, in which the laser cutting device 306 associated rotatably with the carriage 310 has two or more emitters 317a, 317b, which are arranged mutually side by side along an axis which is parallel to the longitudinal axis of the rails 307a, 307b, so as to further increase the speed of the laser cut.

The materials used, as well as the dimensions that constitute the individual components of the invention, may of course be more pertinent according to specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A laser cutting machine (1, 101, 201, 301) in combination with two or more embroidering machines (2a, 2b, 102a, 102b, 202a, 202b, 302a, 302b), the embroidering machines each comprising one frame (3a, 3b, 103a, 103b, 203a, 203b, 302a, 302b) for supporting at least two respective bands of fabric (4a, 4b, 104a, 104b, 2004a, 204b)) stretched in a substantially vertical position so as to face each other and be substantially parallel to each other, and cooperate with embroidering devices, the laser cutting machine comprising a laser cutting head (6, 106a, 106b, 206, 306) and guiding means (7a, 7b, 107a, 107b, 207a, 207b, 307a, 307b) for the sliding, parallel to said at least two bands of fabric, of at least one laser cutting device which can be oriented selectively toward one or the other of said at least two bands that face one another, wherein laser cutting device is also movable toward one or the other of said at least two bands, transversely with respect to said bands so as to work, with the transverse movement, one or the other of said at least two bands.

2. The laser cutting machine according to claim 1, **characterized in that** said guiding means are constituted by two substantially straight rails (7a, 7b) which are arranged approximately parallel to each other and to said frames.

3. The laser cutting machine according to claim 2, **characterized in that** said rails are associated with the upper ends of columns (8a, 8b) which are arranged laterally and externally with respect to said frames and have such a height as to protrude above them with said upper ends.

4. The laser cutting machine according to claim 2, **characterized in that** said rails can be fixed to the ceiling and/or to one or more walls of a building by way of means or brackets.

5. The laser cutting machine according to one or more of the preceding claims, **characterized in that** said rails run longitudinally in a direction which is parallel to said frames and are longer than said two bands of fabric and said frames.

6. The laser cutting machine according to one or more of the preceding claims, **characterized in that** longitudinal grooves are provided longitudinally to said rails in the mutually facing lateral surfaces thereof and the transverse ends of a carriage (10) are slidingly supported therein, said at least one laser cutting device being associated rotatably with said carriage.

7. The laser cutting machine according to one or more of the preceding claims, **characterized in that** said carriage is constituted by a pair of first mutually parallel bars (11a, 11b) which are arranged transversely to said rails, their ends being supported so that they can slide within said grooves formed in said rails.

8. The laser cutting machine according to claim 7, **characterized in that** said carriage comprises a second bar (12) which is slidingly associated transversely with respect to said first bars.

9. The laser cutting machine according to claim 8, **characterized in that** the sliding of said second bar with respect to said first bars is actuated by way of suitable first actuation means which are controlled by a programmable control device.

10. The laser cutting machine according to one or more of the preceding claims, **characterized in that** the sliding of said carriage with respect to said rails is provided by means of second actuation means, which are controlled by a programmable control device.

11. The laser cutting machine according to claim 10, **characterized in that** said laser cutting device is associated in a lower region and rotatably with said second bar and can rotate about an axis which is perpendicular to said second bar by way of the action of third actuation means, which are controlled by a programmable control device.

12. The laser cutting machine according to one or more of the preceding claims, **characterized in that** two laser cutting devices (106a, 106b) arranged mutually side by side are associated in a lower region and rotatably with said second bar and can rotate about two mutually parallel axes which are perpendicular to said second bar.

13. The laser cutting machine according to claim 12, **characterized in that** said two laser cutting devices can rotate in mutually opposite directions.

14. The laser cutting machine according to claim 12, **characterized in that** said two laser cutting devices can rotate in the same direction.

15. The laser cutting machine according to claim 13 or 14, **characterized in that** said two laser cutting devices can rotate about said two mutually parallel axes, which are perpendicular to said second bar, by way of the action of fourth actuation means, which are controlled by a programmable control device.

16. The laser cutting machine according to one or more of the preceding claims, **characterized in that** two sliders (214a, 214b) are sliding associated with said first bars of said carriage longitudinally thereto, two shoulders (215) protruding approximately at right angles below said sliders, a shaft (216) being supported between said shoulders and being arranged along an axis which is approximately parallel to said rails and lies on a plane which is parallel to the plane of arrangement of said first bars, said shaft supporting rotatably said at least one laser cutting device, which can rotate about said shaft by way of the action of fifth actuation means, which are controlled by a programmable control device.

17. The laser cutting machine according to claim 16, **characterized in that** said laser cutting device has a single emitter (217) for a laser beam.

18. The laser cutting machine according to claim 16, **characterized in that** said laser cutting device has two or more emitters (317a, 317b) or a laser beam.

19. The laser cutting machine according to claim 18, **characterized in that** said two or more emitters for a laser beam are arranged mutually side by side along an axis which is parallel to the longitudinal axis of said rails.

20. The laser cutting machine according to one or more of the preceding claims, **characterized in that** said one or more programmable control devices have programs which are adapted to modify automatically the position of said carriage, of said second bar and of said at least one laser cutting head in order to compensate for any warping and/or out-of-parallelism of said rails.

## Patentansprüche

1. Eine Laserschneidemaschine (1, 101, 201, 301) in Kombination mit zwei oder mehr Stickmaschinen (2a, 2b, 102a, 102b, 202a, 202b, 302a, 302b), wobei die Stickmaschinen jeweils einen Rahmen (3a, 3b, 103a, 103b, 203a, 203b, 302a, 302b) umfassen, um mindestens zwei jeweilige Bahnen von Stoff (4a, 4b, 104a, 104b, 204a, 204b) zu tragen, die in einer im Wesentlichen vertikalen Position gestreckt sind, um so einander gegenüberzuliegen und im Wesentlichen zueinander parallel zu sein und um mit Strickmaschinen zusammenzuwirken, wobei die Laserschneidemaschine einen Laserschneidekopf (6, 106a, 106b, 206, 306) und Führungsmittel (7a, 7b, 107a, 107b, 207a, 207b, 307a, 307b) zum Gleiten mindestens einer Laserschneidevorrichtung, parallel zu den mindestens zwei Bahnen Stoff, umfasst, die selektiv zu der einen oder zu der anderen der mindestens zwei Bahnen hin ausgerichtet werden kann, welche einander gegenüberliegen, wobei die Laserschneidevorrichtung ebenfalls zu der einen oder zu der anderen der mindestens zwei Bahnen hin bewegt werden kann, und zwar transversal zu den Bahnen, um so, mit der transversalen Bewegung, die eine oder die andere der mindestens zwei Bahnen zu bearbeiten.

2. Die Laserschneidemaschine gemäß Anspruch 1, **dadurch gekennzeichnet, dass** die Führungsmittel aus zwei im Wesentlichen geraden Schienen (7a, 7b) bestehen, die ungefähr parallel zueinander und zu den Rahmen angeordnet sind.

3. Die Laserschneidemaschine gemäß Anspruch 2, **dadurch gekennzeichnet, dass** die Schienen mit den oberen Enden von Säulen (8a, 8b) verknüpft sind, die seitlich zu den und außerhalb der Rahmen angeordnet sind und eine solche Höhe haben, dass sie mit den oberen Enden über sie hinausragen.

4. Die Laserschneidemaschine gemäß Anspruch 2, **dadurch gekennzeichnet, dass** die Schienen durch Mittel oder Träger an der Decke und/oder an einer oder mehreren Wänden eines Gebäudes befestigt werden können.

5. Die Laserschneidemaschine gemäß einem oder mehreren der obigen Ansprüche, **dadurch gekennzeichnet, dass** die Schienen in einer Längsrichtung verlaufen, die parallel zu den Rahmen ist, und nicht länger sind als die zwei Bahnen von Stoff und die Rahmen.

6. Die Laserschneidemaschine gemäß einem oder mehreren der obigen Ansprüche, **dadurch gekennzeichnet, dass** Längsrillen in Längsrichtung zu den Schienen in den einander gegenüberliegenden Seitenflächen davon geformt sind und die transversalen Enden eines Schlittens (10) verschiebbar darin getragen werden, wobei die mindestens eine Laserschneidevorrichtung drehbar mit dem Schlitten verknüpft ist.

7. Die Laserschneidemaschine gemäß einem oder mehreren der obigen Ansprüche, **dadurch gekennzeichnet, dass** der Schlitten aus einem Paar von ersten zueinander parallelen Stangen (11a, 11b) besteht, die transversal zu den Schienen angeordnet sind, wobei ihre Enden so getragen werden, dass sie in den Rillen gleiten können, die in den Schienen geformt sind.

8. Die Laserschneidemaschine gemäß Anspruch 7, **dadurch gekennzeichnet, dass** der Schlitten eine zweite Stange (12) umfasst, die transversal zu den ersten Stangen verschiebbar verknüpft ist.

9. Die Laserschneidemaschine gemäß Anspruch 8, **dadurch gekennzeichnet, dass** das Gleiten der zweiten Stange im Verhältnis zu den ersten Stangen durch geeignete erste Betätigungsmittel aktiviert wird, die von einer programmierbaren Steuerungsvorrichtung gesteuert werden.

10. Die Laserschneidemaschine gemäß einem oder mehreren der obigen Ansprüche, **dadurch gekennzeichnet, dass** das Gleiten des Schlittens im Verhältnis zu den Schienen durch zweite Betätigungsmittel ermöglicht wird, die von einer programmierbaren Steuerungsvorrichtung gesteuert werden.

11. Die Laserschneidemaschine gemäß Anspruch 10, **dadurch gekennzeichnet, dass** die Laserschneidevorrichtung in einem unteren Bereich und drehbar mit der zweiten Stange verknüpft ist und sich um eine Achse drehen kann, die senkrecht zu der zweiten Stange ist, und zwar durch Wirkung dritter Betätigungsmittel, die von einer programmierbaren Steuerungsvorrichtung gesteuert werden.

12. Die Laserschneidemaschine gemäß einem oder mehreren der obigen Ansprüche, **dadurch gekennzeichnet, dass** zwei nebeneinander angeordnete Laserschneidevorrichtungen (106a, 106b) in einem unteren Bereich und drehbar mit der zweiten Stange verknüpft sind und sich um zwei zueinander parallele Achsen drehen können, die senkrecht zu der zweiten Stange sind.

13. Die Laserschneidemaschine gemäß Anspruch 12, **dadurch gekennzeichnet, dass** die zwei Laserschneidevorrichtungen sich in einander entgegengesetzte Richtungen drehen können.

14. Die Laserschneidemaschine gemäß Anspruch 12, **dadurch gekennzeichnet, dass** die zwei Laserschneidevorrichtungen sich in dieselbe Richtung drehen können.

15. Die Laserschneidemaschine gemäß Anspruch 13 oder 14, **dadurch gekennzeichnet, dass** die zwei Laserschneidevorrichtungen sich durch die Wirkung vierter Betätigungsmittel, die von einer programmierbaren Steuerungsvorrichtung gesteuert werden, um die zwei zueinander parallelen Achsen drehen können, die auf die zweite Stange senkrecht sind.

16. Die Laserschneidemaschine gemäß einem oder mehreren der obigen Ansprüche, **dadurch gekennzeichnet, dass** zwei Schieber (214a, 214b) mit den ersten Stangen des Schlittens in Längsrichtung dazu verschiebbar verknüpft sind, wobei zwei Schultern (215) ungefähr in rechten Winkeln unter den Schiebern herausragen, wobei eine Welle (216) zwischen den Schultern gestützt wird und entlang einer Achse angeordnet ist, die ungefähr parallel zu den Schienen ist und auf einer Ebene liegt, die parallel zur Ebene der Anordnung der ersten Stangen ist, wobei die Welle die mindestens eine Laserschneidevorrichtung drehbar trägt, die sich durch Wirkung fünfter Betätigungsmittel, welche von einer programmierbaren Steuerungsvorrichtung gesteuert werden, um die Welle drehen kann.

17. Die Laserschneidemaschine gemäß Anspruch 16, **dadurch gekennzeichnet, dass** die Laserschneidevorrichtung einen einzigen Emitter (217) für einen Laserstrahl hat.

18. Die Laserschneidemaschine gemäß Anspruch 16, **dadurch gekennzeichnet, dass** die Laserschneidevorrichtung zwei oder mehr Emitter (317a, 317b) für einen Laserstrahl hat.

19. Die Laserschneidemaschine gemäß Anspruch 18, **dadurch gekennzeichnet, dass** die zwei oder mehr Emitter für einen Laserstrahl nebeneinander entlang einer Achse angeordnet sind, die parallel zur Längsachse der Schienen ist.

20. Die Laserschneidemaschine gemäß einem oder mehreren der obigen Ansprüche, **dadurch gekennzeichnet, dass** die einen oder mehreren programmierbaren Steuerungsvorrichtungen Programme haben, die ausgebildet sind, um die Position des Schlittens, der zweiten Stange und des mindestens einen Laserschneidekopfs automatisch zu modifizieren, um ein eventuelles Verziehen und / oder fehlende Parallelität der Schienen auszugleichen.

## Revendications

1. Machine de coupe au laser (1, 101, 201, 301) en combinaison avec deux ou plusieurs machines à broder (2a, 2b, 102a, 102b, 202a, 202b, 302a, 302b), les machines à broder comprenant chacune un cadre (3a, 3b, 103a, 103b, 203a, 203b, 302a, 302b) pour supporter au moins deux bandes de tissu respectives (4a, 4b, 104a, 104b, 204a, 204b) étirées dans une position sensiblement verticale de façon à se faire mutuellement face et à être sensiblement parallèles entre elles, et coopérer avec des dispositifs de broderie, la machine de coupe au laser comprenant une tête de coupe au laser (6, 106a, 106b, 206, 306) et des moyens de guidage (7a, 7b, 107a, 107b, 207a, 207b, 307a, 307b) pour le coulissement, parallèles auxdites bandes de tissu au nombre d'au moins deux, d'au moins un dispositif de coupe au laser qui peut être orienté de façon sélective vers l'une ou l'autre desdites bandes au nombre d'au moins deux qui se font mutuellement face, le dispositif de coupe au laser pouvant également se déplacer vers l'une ou l'autre desdites bandes au nombre d'au moins deux, transversalement par rapport auxdites bandes, de façon à travailler, avec le mouvement transversal, l'une ou l'autre desdites bandes au nombre d'au moins deux.

2. Machine de coupe au laser selon la revendication 1, **caractérisée en ce que** lesdits moyens de guidage sont constitués par deux rails sensiblement droits (7a, 7b) qui sont disposés de façon approximativement parallèle l'un par rapport à l'autre et par rapport auxdits cadres.

3. Machine de coupe au laser selon la revendication 2, **caractérisée en ce que** lesdits rails sont associés aux extrémités supérieures de colonnes (8a, 8b) qui sont disposées latéralement et extérieurement par rapport auxdits cadres, et qui ont une hauteur telle qu'elles fassent saillie au-dessus de ceux-ci avec lesdites extrémités supérieures.

4. Machine de coupe au laser selon la revendication 2, **caractérisée en ce que** lesdits rails peuvent être fixés au plafond et/ou à une ou plusieurs parois d'un bâtiment à l'aide de moyens ou d'étriers.

5. Machine de coupe au laser selon l'une ou plusieurs des revendications précédentes, **caractérisée en ce que** lesdits rails s'étendent longitudinalement dans une direction qui est parallèle auxdits cadres et sont plus longs que lesdites deux bandes de tissus et que lesdits cadres.

6. Machine de coupe au laser selon l'une ou plusieurs des revendications précédentes, **caractérisée en ce que** des rainures longitudinales sont disposées de façon longitudinale par rapport auxdits rails dans les surfaces latérales mutuellement en vis-à-vis de ceux-ci, et **en ce que** les extrémités transversales d'un chariot (10) sont supportées de façon coulissante à l'intérieur de celles-ci, ledit dispositif de coupe au laser au nombre d'au moins un étant associé de façon à pouvoir tourner audit chariot.

7. Machine de coupe au laser selon l'une ou plusieurs des revendications précédentes, **caractérisée en ce que** ledit chariot est constitué par une paire de premières barres mutuellement parallèles (11a, 11b) qui sont disposées transversalement par rapport auxdits rails, leurs extrémités étant supportées de telle sorte qu'elles puissent coulisser à l'intérieur desdites rainures formées dans lesdits rails.

8. Machine de coupe au laser selon la revendication 7, **caractérisée en ce que** ledit chariot comprend une deuxième barre (12) qui est associée de façon à pouvoir coulisser transversalement par rapport auxdites premières barres.

9. Machine de coupe au laser selon la revendication 8, **caractérisée en ce que** le coulissement de ladite deuxième barre par rapport auxdites premières barres est actionné à l'aide de premiers moyens d'actionnement appropriés qui sont commandés par un dispositif de commande programmable.

10. Machine de coupe au laser selon l'une ou plusieurs des revendications précédentes, **caractérisée en ce que** le coulissement dudit chariot par rapport auxdits rails est réalisé à l'aide de deuxièmes moyens d'actionnement, qui sont commandés par un dispositif de commande programmable.

11. Machine de coupe au laser selon la revendication 10, **caractérisée en ce que** ledit dispositif de coupe au laser est associé dans une région inférieure et de façon à pouvoir tourner à ladite deuxième barre, et peut tourner autour d'un axe qui est perpendiculaire à ladite deuxième barre grâce à l'action de troisièmes moyens d'actionnement, qui sont commandés par un dispositif de commande programmable.

12. Machine de coupe au laser selon l'une ou plusieurs des revendications précédentes, **caractérisée en ce que** deux dispositifs de coupe au laser (106a, 106b), disposés mutuellement côte à côte, sont associés dans une région inférieure et de façon à pouvoir tourner à ladite deuxième barre, et peuvent tourner autour de deux axes mutuellement parallèles qui sont perpendiculaires à la deuxième barre.

13. Machine de coupe au laser selon la revendication 12, **caractérisée en ce que** lesdits deux dispositifs de coupe au laser peuvent tourner dans des directions mutuellement opposées.

14. Machine de coupe au laser selon la revendication 12, **caractérisée en ce que** lesdits deux dispositifs de coupe au laser peuvent tourner dans la même direction.

15. Machine de coupe au laser selon la revendication 13 ou 14, **caractérisée en ce que** lesdits deux dispositifs de coupe au laser peuvent tourner autour desdits deux axes mutuellement parallèles, qui sont perpendiculaires à ladite deuxième barre, grâce à l'action de quatrièmes moyens d'actionnement, qui sont commandés par un dispositif de commande programmable.

16. Machine de coupe au laser selon l'une ou plusieurs des revendications précédentes, **caractérisée en ce que** deux éléments de coulissement (214a, 214b) sont associés de façon coulissante auxdites premières barres dudit chariot longitudinalement par rapport à celui-ci, deux épaulements (215) faisant saillie approximativement à angle droit en dessous desdits éléments de coulissement, un arbre (216) étant supporté entre lesdits épaulements et étant disposé le long d'un axe qui est approximativement parallèle auxdits rails et qui se trouve sur un plan qui est parallèle au plan de disposition desdites premières barres, ledit arbre supportant de façon à pouvoir tourner ledit dispositif de coupe au laser au nombre d'au moins un, qui peut tourner autour dudit arbre grâce à l' action de cinquièmes moyens d'actionnement, qui sont commandés par un dispositif de commande programmable.

17. Machine de coupe au laser selon la revendication 16, **caractérisée en ce que** ledit dispositif de coupe au laser comporte un émetteur unique (217) pour un faisceau laser.

18. Machine de coupe au laser selon la revendication 16, **caractérisée en ce que** ledit dispositif de coupe au laser comporte deux ou plusieurs émetteurs (317a, 317b) pour un faisceau laser.

19. Machine de coupe au laser selon la revendication 18, **caractérisée en ce que** lesdits émetteurs au nombre de deux ou de plusieurs pour un faisceau laser sont disposés mutuellement côte à côte le long d'un axe qui est parallèle à l'axe longitudinal desdits rails.

20. Machine de coupe au laser selon l'une ou plusieurs des revendications précédentes, **caractérisée en ce que** lesdits dispositifs programmables au nombre d'un ou de plusieurs comportent des programmes qui sont adaptés de façon à modifier automatiquement la position dudit chariot, de ladite deuxième barre et de ladite tête de coupe au laser au nombre d'au moins une afin de compenser tout voile et/ou tout défaut de parallélisme desdits rails.
